# EUROPÄISCHE PATENTANMELDUNG

(11) **EP 4 253 496 A1**
(43) Veröffentlichungstag der Anmeldung: **04.10.2023**
(21) Anmeldenummer: 23165568.9
(22) Anmeldetag: 30.03.2023
(51) Int. Cl.: C09J 153/02, C09J 7/38

(54) **HAFTKLEBEMASSE AUF BASIS VON HYDRIERTEN POLYVINYLAROMATEN-POLYDIEN- BLOCKCOPOLYMEREN**

(30) Priorität: 31.03.2022 DE 102022107747
(71) Anmelder: tesa SE, 22848 Norderstedt (DE)
(72) Erfinder: DOLLASE, Thilo, 22848 Norderstedt (DE); TASCHE, Jos, 22848 Norderstedt (DE); PÖHLS, Jan Ole, 22848 Norderstedt (DE)
(74) Vertreter: tesa SE

(57) **Zusammenfassung**

Die Erfindung betrifft eine Haftklebemasse umfassend a) mindestens 38 Gew.-% und höchstens 58 Gew.-% einer Elastomerkomponente, wobei, i) die Elastomerkomponente zumindest 60 Gew.-%, bezogen auf die Elastomerkomponente, hydriertes Polyvinylaromat-Polydien-Blockcopolymer mit einem Polyvinylaromatenanteil von mindestens 18 Gew.-% und einem Peak-Molekulargewicht von 80.000 bis 500.000 g/mol, bestimmt gemäß GPC (Test I), enthält; ii) die Polydien-Blöcke im Wesentlichen voll hydriert sind; und iii) das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat und B = Ethylen und Butylen oder Ethylen und Propylen, Z = Derivat einer Kopplungssubstanz ist, und wobei der Ethylen-Anteil in den B-Blöcken mindestens 50 Gew.-% beträgt; b) eine Klebharzkomponente; c) eine Weichmacherkomponente und d) optional weitere Zuschlagsstoffe, wobei sich der Anteil der Elastomerkomponente auf das Gesamtgewicht der Haftklebemasse bezieht.

## Beschreibung

Die vorliegende Erfindung betrifft eine Haftklebemasse basierend auf hydrierten Polyvinylaromaten-Polydien-Blockcopolymeren und ein Klebeband mit mindestens einer Schicht der Haftklebemasse sowie die Verwendung derselben.

Klebstoffe und Klebebänder werden im Allgemeinen verwendet, um zwei Substrate zusammenzufügen, so dass eine dauerhafte oder permanente Verbindung entsteht. Spezielle Klebebandprodukte weisen eine Schaumschicht auf und werden beispielsweise in der Automobilindustrie zur permanenten Verklebung von Bauteilen an der Karosserie oder im Motorbereich verwendet. Typische Beispiele hierfür sind die Emblemverklebung sowie das Fixieren von Kunststoffteilen und Gummitürdichtungen. Ein gängiges Material für Anbauteile aus Kunststoff ist PP/EPDM, PP/EPM oder PP/EPR.

Beispiele für Selbstklebebänder für die Verklebung von Teilen auf Automobillacken sind beispielsweise in der WO 2008/070386 A1 und in der US 4,415,615 A offenbart.

Trotz einer Vielzahl an Klebstoffen und Klebebändern ist aufgrund von neuartigen Substraten sowie steigenden Anforderungen bei der Endanwendung die Notwendigkeit gegeben, neue Haftklebemassen, Formulierungen und Klebebanddesigns zu entwickeln. Selbst bekannte Bauteilmaterialien wie PP/EPDM, PP/EPM oder PP/EPR stellen immer noch Herausforderungen an leistungsfähige Haftklebemassen dar, u.a. weil die Anforderungen stetig steigen, wie zum Beispiel die Scherfestigkeit eines Klebeverbunds bei erhöhten Temperaturen.

Weiterhin steigt die Verwendung von Klebebändern aufgrund des fortlaufenden Trends im Transportsektor und insbesondere in der Automobilindustrie, das Gewicht zum Beispiel eines Autos weiter zu verringern und somit den Kraftstoffverbrauch zu reduzieren. Dies führt dazu, dass Klebebänder für Anwendungen verwendet werden, für die bisherige Klebebandprodukte nicht vorgesehen und entwickelt waren, wodurch zusätzlich zu der mechanischen Belastung und den für Klebeanwendungen kritischen Haftuntergründen auch noch stetig steigende Anforderungen gerade für permanente Verklebungen hinsichtlich der UV- und Bewitterungsstabilität dazukommen.

Folglich existiert die Anforderung an ein Selbstklebebandprodukt, zum einen eine verbesserte Haftung auf niedrigenergetischen Oberflächen wie PP/EPDM, PP/EPM oder PP/EPR aufzuweisen und zum anderen auch unter extremen klimatischen Bedingungen ein hervorragendes Leistungsprofil zu bewahren.

Zusätzlich muss das Klebeband auch den Herstellungsprozessen gerecht werden. Aufgrund fortschreitender Automatisierung von Produktionsprozessen sowie des Wunsches nach ökonomischeren Fertigungsweisen muss das Klebeband sobald es an der richtigen Stelle platziert ist, eine genügend hohe Adhäsion aufweisen und teilweise auch hohe Scherkräfte aushalten. Hierzu ist es von Vorteil, wenn die Klebebänder einen hohen Tack zeigen und die Klebemassen auf diversen Untergründen schnell aufließen, so dass in kürzester Zeit eine gute Benetzung und somit hohe Klebkräfte erreicht werden.

Da gerade der letzte Punkt, nämlich das schnelle Erreichen konstanter Klebkräfte, somit eine geringe Tendenz zum Aufließen auf diversen Oberflächen, schwer mit harzmodifizierten Acrylat- oder Reinacrylathaftklebemassen erreichbar ist, werden stattdessen häufig Synthesekautschuke oder Blends mit Synthesekautschuken als geeignete Materialien zur Verklebung auf unpolaren Oberflächen beschrieben. Die EP 0 349 216 A1 und EP 0 352 901 A1 beschreiben zweiphasige Blends bestehend aus einem Polyacrylat und einem Synthesekautschuk, bevorzugt einem Styrolblockcopolymer, welche besonders für die Verklebung auf Farben und Lacken ausgelobt werden. Blendsysteme können jedoch den Nachteil aufweisen, dass sich die Morphologie des Blends über die Zeit und/oder mit steigender Temperatur ändern kann, was sich in einer makroskopischen Änderung der Polymer- beziehungsweise Produkteigenschaft äußern kann. Weiterhin kann es im Extremfall zu einer kompletten Entmischung der Polymerkomponenten kommen und einige Blendkomponenten können sich mit der Zeit an Oberflächen anreichern, wodurch sich die Adhäsion ändern kann. Da generell ein großer Aufwand betrieben werden muss, zum Beispiel durch den Einsatz von Kompatibilisatoren wie in der US 6,379,791 A offenbart, um thermisch und langzeitstabile Blends für Klebeanwendungen herzustellen, sind diese Blendsysteme nicht immer von Vorteil.

Die EP 2 226 369 A1 beschreibt ein Klebeband, welches einen viskoelastischen Acrylatschaumträger aufweist, der mit mindestens einer Haftklebemasseschicht kaschiert ist. Die Haftklebemasse basiert auf einem chemisch vernetzten Kautschuk, bevorzugt einem mittels Elektronenstrahlhärtung vernetzten Synthesekautschuk. Die dort beschriebenen Klebebänder zeigen sowohl gute Klebkräfte auf verschiedenen Farb- und Lackschichten als auch eine ausreichende Kohäsion bei hohen Temperaturen. Als einsetzbare Kautschuke werden allgemein Polyvinylaromat-Polydien-Blockcopolymere und hydrierte Derivate genannt. Explizit beschrieben werden lediglich Formulierungen basierend auf Polystyrol-Polyisopren-Blockcopolymeren (sogenanntes SIS). Besondere Eignung auf PP/EPDM, PP/EPM oder PP/EPR wird nicht beschrieben.

Die DE 10 2012 212 883 A1 offenbart Klebebänder mit einem viskoelastischen Acrylatschaumträger und zumindest einer darauf aufgebrachten Klebeschicht auf Basis eines Gemischs von Synthesekautschuken. Hervorgehoben werden Polyvinylaromat-Polydien-Blockcopolymere und hydrierte Derivate. Explizit beschrieben werden neben Formulierungen mit Polystyrol-Polyisopren-Blockcopolymeren auch solche basierend auf Polystyrol-Polybutadien-Blockcopolymeren (sogenanntes SBS), die im Hinblick auf Langzeitstabilität bereits Vorteile gegenüber solchen enthaltend Polyisopren aufweisen.

Weitere Beispiele für Selbstklebebänder mit einem Schaumträger und darauf befindlicher Haftklebemasse auf Synthesekautschukbasis sind in EP 1 417 255 B1, in WO 2008/073669 A1 und in EP 3 243 886 A1 sowie EP 3 336 153 A1 beschrieben. Den Offenbarungen dieser Druckschriften ist gemein, dass zwar allgemein Polyvinylaromat-Polydien-Blockcopolymere und hydrierte Derivate genannt werden, die explizite Offenbarung sich aber auf Formulierungen basierend auf Polystyrol-Polyisopren-Blockcopolymeren beschränkt.

Haftklebemassen basierend auf hydrierten Polyvinylaromat-Polydien-Blockcopolymeren sind bekannt.

DE 10 2006 037 627 A1 beschreibt Haftklebemassen, die hydrierte Blockcopolymere enthalten, sowie Klebharz und Polyisobutylen. Im Hinblick auf die hydrierten Blockcopolymere wird in der Beschreibung keine spezielle Auswahl getroffen, in den Beispielen sind solche mit einem Polyvinylaromaten-Anteil von 13 Gew.-% erwähnt. Die Haftklebemasse kann auf ein Trägermaterial aufgebracht sein, bei dem es sich jedoch, da die Zielanwendung Oberflächenschutzfolien sind, um ein filmförmiges und kein geschäumtes Material handelt.

DE 10 2007 021 504 A1 offenbart u. a. Formulierungen, die Polystyrol-Poly(Ethylen/Butylen)-Blockcopolymere (sogenanntes SEBS) und einen hohen Anteil an Flüssigharz enthalten. Auch wenn in der Beschreibung keine speziellen Angaben zum Polyvinylaromaten-Anteil angegeben sind, so deutet DE 10 2007 021 504 doch durch die Beispiele an, dass basierend auf hydrierten Polystyrol-Polydien-Blockcopolymeren Haftklebemassen typischerweise vorteilhaft erzeugt werden, wenn Blockcopolymere mit niedrigem Polyvinylaromaten-Anteil ausgewählt werden.

EP 0 885 942 A1 schlägt Haftklebemassen auf Basis hydrierter Polystyrol-Polydien-Blockcopolymeren vor. Zielanwendungen liegen im Bereich Hautverklebung. Beispielzusammensetzungen nutzen innerhalb der Elastomerkomponente in der Hauptsache hydrierte Polystyrol-Polydien-Blockcopolymere mit relativ geringer Molmasse. Hydrierte Polystyrol-Polydien-Blockcopolymere mit höherer Molmasse, die für Wärmescherfestigkeit erforderlich sind, kommen höchstens in untergeordneter Menge zum Einsatz (Beispiel 10: 5,5 % Kraton G1650; Beispiel 12: 15,0 % Kraton G1650). EP 991 730 B1 lehrt ähnliche Formulierungen.

EP 0 758 009 A2 beschreibt Haftklebemassen auf Basis hydrierter Polystyrol-Polydien-Blockcopolymeren. Der Anteil an hydrierten Polystyrol-Polydien-Blockcopolymeren in der Gesamtformulierung liegt bei höchstens 20 %. Bei solchen geringen Anteilen an hydrierten Polystyrol-Polydien-Blockcopolymeren kann von geringer Wärmescherfestigkeit ausgegangen werden. Es wird zudem ein sehr hoher Gehalt an Weichmacher von 60 bis 95 % vorgeschlagen.

WO 2016/130627 A1 beansprucht Formulierungen mit hydrierten Polystyrol-Polydien-Blockcopolymeren, die im hydrierten Polydien-Block einen hohen Vinyl-Anteil aufweisen. Die Beispielformulierungen enthalten stets einen sehr hohen Anteil an Weichmacher.

Obwohl dem Fachmann also die Nutzung von hydrierten Blockcopolymeren für die Formulierung von Haftklebemassen an sich bekannt ist, sind bemerkenswerter Weise keine konkreten Beispiele für solche Haftklebemassen für Selbstklebebänder mit einem Schaumträger, insbesondere einem viskoelastischen acrylatbasierten Schaumträger beschrieben worden, was von einer besonderen Schwierigkeit der Realisierung zeugen lässt. Von der grundsätzlichen Schwierigkeit, hydrierte Polyvinylaromat-Polydien-Blockcopolymere wie SEBS zu tackifizieren, wird auch bereits von Jagisch und Tancrede in D. Satas, Handbook of Pressure Sensitive Adhesive Technology, 3. Aufl., 1999, D. Satas & Associates, Warwick, S. 367, Tabelle 16-5, berichtet.

Aufgabe der Erfindung ist es daher, eine Haftklebemasse aufzuzeigen, die eine gute Verklebungsleistung auf PP/EPDM, PP/EPM oder PP/EPR bietet, sowie ein Klebeband mit zumindest einer Schicht daraus zur Verfügung zu stellen. Gesucht ist außerdem ein Selbstklebeprodukt, das aus einem Schaumträger und einer zumindest einseitig auf dem Schaumträger aufgebrachten Haftklebemasse dieser Art besteht, das eine hervorragende Scherfestigkeit auch bei hohen Temperaturen aufweist und vor allem die verbesserte Langlebigkeit von in der Polymerhauptkette gesättigten Elastomeren im Vergleich zu in der Hauptkette ungesättigten Elastomeren bietet.

Gelöst wird diese Aufgabe unerwarteter Weise durch eine Haftklebemasse, wie sie im Hauptanspruch niedergelegt ist. Gegenstand der Unteransprüche sind vorteilhafte Fortbildungen des Erfindungsgegenstandes.

Daher ist ein erster Gegenstand der vorliegenden Erfindung eine Haftklebemasse umfassend:
a) mindestens 38 Gew.-% und höchstens 58 Gew.-% einer Elastomerkomponente, wobei,
   i) die Elastomerkomponente zumindest 60 Gew.-%, bezogen auf die Elastomerkomponente, hydriertes Polyvinylaromat-Polydien-Blockcopolymer mit einem Polyvinylaromatenanteil von mindestens 18 Gew.-% und einem Peak-Molekulargewicht von 80.000 bis 500.000 g/mol, bestimmt gemäß GPC (Test I), enthält;
   ii) die Polydien-Blöcke im Wesentlichen voll hydriert sind; und
   iii) das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz ist, und wobei der Ethylen-Anteil in den B-Blöcken mindestens 50 Gew.-% beträgt.
b) eine Klebharzkomponente;
c) eine Weichmacherkomponente, und
d) optional weitere Zuschlagsstoffe,
wobei sich der Anteil der Elastomerkomponente auf das Gesamtgewicht der Haftklebemasse bezieht.

Unter im Wesentlichen voll hydriert im Rahmen der vorliegenden Erfindung ist ein Hydrierungsgrad von wenigstens 90 %, vorzugsweise von wenigstens 95 % und besonders bevorzugt von wenigstens 99 % zu verstehen. Unter hydrierten Blockcopolymeren werden im Rahmen der vorliegenden Erfindung solche verstanden, bei denen die Polydien-Blöcke im Wesentlich voll hydriert vorliegen.

Beispiele für Kopplungssubstanzen sind u. a. bei Holden zu finden (G. Holden, D. R. Hansen in Thermoplastic Elastomers, G. Holden, H. R. Kricheldorf, R. P. Quirk (Hrsg.), 3. Aufl. 2004, C. Hanser, München, S. 49f), ohne sich hierdurch einschränken zu wollen.

Eine Haftklebemasse ist eine Klebemasse, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

### Elastomerkomponente

Im Rahmen der vorliegenden Erfindung hat sich vor allem gezeigt, dass sich die vorteilhafte Kombination an Eigenschaften, insbesondere die hohe Scherfestigkeit bei hohen Temperaturen, durch eine ausgewogene Abstimmung der einzelnen Komponenten der Haftklebemasse erreichen lässt, jedoch nicht durch solche, die vielfach im Stand der Technik offenbart wurden.

Ein zu geringer Anteil an Vinylaromatenblockcopolymeren hat zur Folge, dass die Wärmescherfestigkeit der Haftklebemasseschicht relativ niedrig ist. Ein zu hoher Anteil an Vinylaromatenblockcopolymere hat wiederum zur Folge, dass die Haftklebemasseschicht kaum noch haftklebrig ist.

Daher ist eine Ausführungsform bevorzugt, in der die in der Elastomerkomponente enthaltenen hydrierten Polyvinylaromat-Polydien-Blockcopolymere einen Polyvinylaromatanteil von 20 bis 36 Gew.-%, vorzugsweise 25 bis 33 Gew.-% aufweisen, bezogen auf die gesamten hydrierten Polyvinylaromaten-Polydien-Blockcopolymere. Der Anteil an Polyvinylaromaten in den Polyvinylaromaten-Polydien-Blockcopolymeren kann beispielsweise mittels ¹H- oder ¹³C-NMR (Kernspinresonanzspektroskopie, Test IX) bestimmt werden. Der Anteil an Polyvinylaromaten kann für kommerziell erhältliche hydrierte Polyvinylaromat-Polydien-Blockcopolymeren auch den Herstellerangaben entnommen werden.

Es hat sich überraschend gezeigt, dass die Menge an Elastomerkomponente, die in der erfindungsgemäßen Klebemasse enthalten ist, einen Einfluss darauf hat, wie gut die Haftklebemasse zur Verbindung von unpolaren Substraten wie PP und EPR geeignet ist. So wurde im Rahmen der vorliegenden Erfindung eine Abnahme der Scherstandszeit beobachtet, wenn der Anteil an Elastomerkomponente in der Haftklebemasse außerhalb des beanspruchten Bereichs von 38 bis 58 Gew.-% lag, bezogen auf das Gesamtgewicht der Haftklebemasse. Besonders gute Ergebnisse konnten erzielt werden, wenn der Anteil noch weiter angepasst wurde. Daher ist eine Ausführungsform bevorzugt, in der der Anteil an Elastomerkomponente in der Haftklebemasse, bezogen auf das Gesamtgewicht der Haftklebemasse, 40 bis 55 Gew.-% beträgt.

Die hydrierten Polyvinylaromat-Polydien-Blockcopolymere, die erfindungsgemäß eingesetzt werden, zeichnen sich durch ihren linearen ABA-Aufbau sowie linearen (AB)ₙZ-Aufbau mit n =2 oder radialen (AB)ₙ-Aufbau sowie radialen (AB)ₙZ-Aufbau mit n ≥ 3 und ihren Ethylenanteil aus. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Die in der erfindungsgemäßen Haftklebemasse eingesetzten hydrierten Polyvinylaromat-Polydien-Blockcopolymere sind bevorzugt solche, deren Vinylaromaten-Blöcke (A-Blöcke) Styrol enthalten und die gebildet werden durch Polymerisation von Dienen (B-Blöcke) und anschließende Hydrierung, so dass vorzugsweise Ethylen und Butylen oder Ethylen und Propylen die B-Blöcke aufbauen. Bevorzugt werden Blockcopolymere, die in Bezug auf die Polydien-Blöcke (B-Blöcke) im Wesentlichen vollständig hydriert sind, eingesetzt.

Um das Eigenschaftsprofil der erfindungsgemäßen Haftklebemasse weiter zu verbessern, hat es sich als vorteilhaft erwiesen, wenn die Elastomerkomponente zusätzlich zu einem hydrierten Polyvinylaromat-Polydien-Blockcopolymer mit einem linearen oder radialen Aufbau ein hydriertes Polyvinylaromat-Polydien-Diblockcopolymer A'B' enthält, wobei A' und B' vorzugsweise A und B wie oben definiert entsprechen und die Polydienblöcke im Wesentlichen voll hydriert sind.

In einer bevorzugten Ausführungsform handelt es sich bei dem hydrierten Diblockcopolymer um eines mit einem Peak-Molekulargewicht, bestimmt mittels GPC (Test I), von weniger 100.000 g/mol. Bevorzugt beträgt der Anteil des hydrierten Diblockcopolymers in der Elastomerkomponente nicht mehr als 25 Gew.-%, vorzugsweise 15 bis 20 Gew.-%, jeweils bezogen auf das Gesamtgewicht der Elastomerkomponente.

In einer weiterhin bevorzugten Ausführungsform weist die Elastomerkomponente weiterhin zumindest ein hydriertes Diblockcopolymer mit einem Peak-Molekulargewicht, bestimmt mittels GPC, von größer 100.000 g/mol auf, wobei sich der Anteil dieser hydrierten Diblockcopolymere vorzugsweise auf 40 Gew.-%, besonders bevorzugt 15 bis 35 Gew.-%, jeweils bezogen auf das Gesamtgewicht der Elastomerkomponente, beschränkt.

### Klebharzkomponente

Die erfindungsgemäße Haftklebemasse enthält weiterhin eine Klebharzkomponente. Der Anteil der Klebharzkomponente, bezogen auf das Gesamtgewicht der Haftklebemasse, beträgt vorzugsweise 35 bis 60 Gew.-%. Die Klebharzkomponente enthält ein oder mehrere Klebharze. Die Klebharze sind so ausgewählt, dass sie hauptsächlich mit den B-Blöcken dominierten Bereichen der Haftklebemasse mischbar (verträglich, kompatibel) sind. Zumindest ein Klebharz zeichnet sich weiterhin dadurch aus, dass es eine Erweichungstemperatur nach der Ring-und-Kugel-Methode von größer 95 °C, vorzugsweise aber nicht mehr als 135 °C aufweist. Die Erweichungstemperatur kann dabei gemäß Test II wie unten beschrieben bestimmt werden. Bevorzugt weisen alle Klebharze in der Klebharzkomponente eine Erweichungstemperatur in diesem Bereich auf.

Vorzugweise werden als Klebharzkomponenten solche eingesetzt, die ausgewählt sind aus der Gruppe bestehend aus partiell oder vollständig hydriertem Harz auf Basis des Dicyclopentadiens, partiell oder vollständig hydrierte Kohlenwasserstoffharze auf Basis von C₅, C₅/C₉- oder C₉-Monomerströmen, Polyterpenharze auf Basis von α-Pinen und/oder β-Pinen und δ-Limonen und einem hydrierten Polymerisat reiner C₈-oder C₉-Aromaten, wobei das Harz partiell oder vollständig hydriert ist.

Unter "partiell hydriert" ist im Rahmen der vorliegenden Erfindung ein Hydrierungsgrad von mindestens 80%, vorzugsweise mindestens 85% zu verstehen.

Die erfindungsgemäße Klebemasse weist vorzugsweise wenigstens eine Klebharzkomponente auf, die einen DACP (diacetone alcohol cloud point) von wenigstens 35 °C, vorzugsweise von wenigstens 55 °C aufweist. Der DACP kann dabei gemäß Test III, wie unten beschrieben, bestimmt werden.

In einer weiterhin bevorzugten Ausführungsform umfasst die erfindungsgemäße Haftklebemasse wenigstens eine Klebharzkomponente, die einen MMAP (mixed methylcyclohexane aniline point) von größer 45 °C, vorzugsweise größer 75 °C aufweist. Der MMAP kann gemäß Test IV wie unten beschrieben bestimmt werden.

### Weichmacherkomponente

Neben der Elastomerkomponente und der Klebharzkomponente umfasst die erfindungsgemäße Haftklebemasse weiterhin eine Weichmacherkomponente. Der Anteil an Weichmacherkomponente, bezogen auf das Gesamtgewicht der Haftklebemasse, beträgt dabei vorzugsweise nicht mehr als 20 Gew.-%, vorzugsweise 2 bis 15 Gew.-%, besonders bevorzugt 4 bis 12 Gew.-%. Es hat sich überraschend gezeigt, dass ein Weichmacherkomponentenanteil in den genannten Mengen ausreichend ist, um eine Haftklebemasse mit einer ausreichend hohen Verklebungsfestigkeit zu erhalten, was im Gegensatz zu dem steht, was der Stand der Technik lehrt, wo von einem Gehalt an Weichmachern von 60 bis 95 Gew.-% ausgegangen wird. Die Weichmacherkomponente kann einen oder mehrere Weichmacher enthalten.

Der Weichmacher ist vorzugsweise ausgewählt aus der Gruppe bestehend aus Ethylen/Propylen-Copolymer, Ethylen/Butylen-Copolymer, Butylen/iso-Butylen-(Co)-Polymer, Butylenhomopolymer, iso-Butylenhomopolymer und Mineralöl.

In einer ersten bevorzugten Ausführungsform weist der Weichmacher ("Typ 1") eine gewichtsmittlere Molekularmasse, bestimmt mittels GPC (Test I), von mindestens 10.000 g/mol, bevorzugt von mindestens 100.000 g/mol, und höchstens 1.000.000 g/mol auf. In diesen Fällen ist der Weichmacher vorzugweise ein Ethylen/Propylen-Copolymer oder Ethylen/Butylen-Copolymer mit linearer oder radialer Struktur.

In einer weiteren bevorzugten Ausführungsform weist der Weichmacher ("Typ 2") eine gewichtsmittlere Molmasse, bestimmt mittels GPC (Test I), von mindestens 3.000 g/mol und höchstens 50.000 g/mol, bevorzugt höchstens 20.000 g/mol auf. In diesem Fall handelt es sich bei dem Weichmacher vorzugsweise um ein Butylen/iso-Butylen-(Co)-Polymer.

In einer dritten Ausführungsform wird der Weichmacher ("Typ 3") aus Mineralölen ausgewählt.

### weitere Zuschlagstoffe

Um das Eigenschaftsprofil der erfindungsgemäßen Haftklebemasse weiter anzupassen, können der Haftklebemasse weitere Zuschlagstoffe beigefügt werden. Dabei handelt es sich vorzugsweise um solche, die ausgewählt sind aus der Gruppe bestehend aus primären Antioxidantien wie sterisch gehinderten Phenolen, sekundären Antioxidantien wie Phosphite oder Thioether, Prozessstabilisatoren wie C-Radikalfänger, Lichtschutzmitteln wie UV-Absorber oder sterisch gehinderten Aminen, Verarbeitungshilfsmitteln und weiteren Elastomeren wie solche auf Basis reiner Kohlenwasserstoffe wie ungesättigte Polydiene, natürlich oder synthetisch erzeugtes Polyisopren oder Polybutadien, chemisch im wesentlich gesättigte Elastomere wie gesättigte Ethylen-Propylen-Copolymere, α-Olefincopolymere, Polyisobutylen, Butylkautschuk, Ethylen-Propylenkautschuk und funktionalisierte Kohlenwasserstoffe wie halogenhaltige, acrylathaltige oder vinyletherhaltige Polyolefine.

### Haftklebemasse

Die erfindungsgemäße Haftklebemasse zeichnet sich durch eine Reihe von physikalischen Eigenschaften aus, die sie für den Einsatz zum Verkleben von niedrigenergetischen Oberflächen wie PP/EPDM, PP/EPM und PP/EPR aber auch anderen Oberflächen wie Stahl besonders geeignet machen. Dabei wurde überraschend gefunden, dass diese vorteilhaften Eigenschaften auch unter hohen Temperaturen erhalten werden konnten.

Die erfindungsgemäßen Haftklebemasse zeichnet sich insbesondere durch ein Anforderungsprofil aus, wie es der folgenden Tabelle zusammengefasst ist. Dabei sticht vor allem die gute Verklebungsleistung auf PP/EPDM, PP/EPM und PP/EPR heraus.

**Tabelle 1: Anforderungsprofil Haftklebemasse**

| Anforderung | Eigenschaft | Leistungsvermögen | bevorzugt | Sehr bevorzugt |
|---|---|---|---|---|
| Verklebungsfestigkeit (Test Va) | Klebkraft (Stahl) | > 3 N/cm | > 5 N/cm | > 7 N/cm |
| (Test Vb) | Klebkraft (PE) | > 3 N/cm | > 5 N/cm | - |
| Wärmescherfestigkeit (SAFT) (Test VI) | SAFT (200 g) | > 120 °C | > 160 °C | > 200 °C |
| Scherstandszeit (SSZ) (Test VIIa) | SSZ 80 °C PP/EPR (0,5 kg) | > 800 min | > 1500 min | > 10000 min |
| (Test VIIb) | SSZ 80 °C Stahl (0,5 kg) | > 5000 min | > 8000 min | > 10000 min |

Daher ist eine Ausführungsform bevorzugt, in der die Haftklebemasse eine Klebkraft (Peel) auf Stahl von mehr als 3 N/cm, vorzugsweise mehr als 5 N/cm und insbesondere mehr als 7 N/cm aufweist, jeweils bestimmt gemäß der beschriebenen Testmethode Va.

Weiterhin ist eine Ausführungsform bevorzugt, in der die Haftklebemasse eine Klebkraft (Peel) auf PE von mehr als 3 N/cm, vorzugsweise mehr als 5 N/cm aufweist, jeweils bestimmt gemäß der beschriebenen Testmethode Vb.

In einer weiterhin bevorzugten Ausführungsform weist die Haftklebemasse eine Wärmescherfestigkeit (shear adhesive failure temperature: SAFT) bei 200 g von mehr als 120 °C, vorzugsweise mehr als 160 °C und besonders bevorzugt mehr als 200 °C auf, jeweils bestimmt gemäß Testmethode VI.

Weiterhin bevorzugt ist eine Ausführungsform, in der die Haftklebemasse eine Scherstandskraft (SSZ) bei 80 °C und 0,5 g auf PP und/oder EPR von mehr als 800 min, vorzugsweise mehr als 1500 min und besonders bevorzugt mehr als 10000 min aufweist, jeweils bestimmt gemäß Test Vlla.

Vorzugsweise weist die Haftklebemasse eine Scherstandskraft (SSZ) bei 80 °C und 0,5 g auf Stahl von mehr als 5000 min, vorzugsweise mehr als 8000 min und besonders bevorzugt mehr als 10000 min auf, jeweils bestimmt gemäß Test Vllb.

### Klebeband

Ein weiterer Gegenstand der vorliegenden Erfindung ist ein Klebeband mit einem Träger, auf den mindestens eine Schicht der erfindungsgemäßen Haftklebemasse aufgebracht ist. Ebenfalls Gegenstand der Erfindung ist ein Klebeband mit einem Träger, auf den auf beiden Seiten eine Schicht erfindungsgemäßer Haftklebemasse aufgebracht ist, wobei die beiden Schichten aus gleicher oder verschiedenen Haftklebemassen bestehen. Darüber hinaus ist Gegenstand der Erfindung ein Klebeband mit einem Träger, auf den auf einer Seite eine Schicht einer erfindungsgemäßen Haftklebemasse aufgebracht ist und auf der anderen Seite eine weitere, nicht erfindungsgemäße Klebemasse (wie zum Beispiel einer Polystyrol-Polybutadien-Blockcopolymer (SBS) basierenden Haftklebemasse oder einer Polystyrol-Polyisopren-Blockcopolymer (SIS) basierenden Haftklebemasse oder einer Haftklebemasse basierend auf einem Blend aus Poly(meth)acrylat und Polystyrol-Polydien) aufgebracht ist. Letztere kann haftklebrig oder nicht haftklebrig beziehungsweise heißsiegelfähig sein.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sein können als die Dicke. Die Dicke ist über die gesamte durch Länge und Breite bestimmte Flächenausdehnung des Klebebands möglichst gleich, vorzugsweise im Wesentlichen gleich.

Das Klebeband liegt insbesondere in Bahnform vor. Unter einer Bahn wird ein Objekt verstanden, dessen Länge um ein Vielfaches größer ist als seine Breite und die Breite entlang der gesamten Länge in etwa vorzugsweise genau gleichbleibend ausgebildet ist. Das Klebeband kann in Form einer Rolle, also in Form einer archimedischen Spirale auf sich selbst aufgerollt, hergestellt werden.

Bei dem Trägermaterial handelt es sich vorzugweise um eine Folie. Als Folien bieten sich insbesondere Polyesterfolien und hier besonders bevorzugt Folien auf Basis von Polyethylenterephthalat (PET) an. Polyesterfolien sind bevorzugt biaxial verstreckt. Weiterhin sind Folien aus monoaxial verstrecktem Polypropylen, biaxial verstrecktem Polypropylen oder biaxial verstrecktem Polyethylen denkbar. Diese Aufzählung soll Beispiele aufzeigen, dem Fachmann sind weitere Systeme bekannt, die dem Gedanken der vorliegenden Erfindung entsprechen.

Bei dem Trägermaterial kann es sich auch um eine elastisch oder plastisch verformbare Folie wie einer aus Polyurethan oder Polyolefin handeln (max. Dehnung nach ISO 527 von größer 100 % oder sogar größer 300 %). Unter den Polyurethanen sind Polyesterpolyurethane und Polyetherpolyurethane besonders bevorzugt.

Besonders bevorzugt handelt es sich bei dem Träger um einen Schaumträger, besonders bevorzugt um einen Schaumträger aus einem PE- oder PU-Schaum und insbesondere um einen Poly(meth)acrylatschaum. Dabei kann der Schaum jede bekannte Form von Schaumzellen aufweisen also offenzellig oder geschlossenzellig sein. Die Schäumung kann durch chemische oder physikalische Schäumungsmittel erzeugt worden sein, durch Einschlagen von Gas oder insbesondere Luft ("Frothing") oder durch Einbringen von Hohlkugeln, ohne dass diese Aufzählung abschließend ist, sondern lediglich als Beispiel zu verstehen ist. Spezifische Beispiele sind Glashohlkugeln, keramische Hohlkugeln, Metallhohlkugeln und expandierte, expandierbare und vorexpandierte Mikroballons.

Kombinationen verschiedener genannter und weiterer Schäumungsmethoden sind ebenfalls möglich.

Als Träger wird vorzugsweise ein Schaumträger mit einem Poly(meth)acrylat als Gerüststruktur verwendet. Vorteilhafterweise liegt die Glasübergangstemperatur des Poly(meth)acrylats unterhalb Anwendungstemperatur, insbesondere unterhalb 0 °C, sehr bevorzugt unterhalb -20 °C, so dass es einen viskoelastischen Charakter aufweist. Die Glasübergangstemperatur ist dabei als quasistatische Glasübergangstemperatur zu verstehen, die mittels DSC nach Test VIII ermittelt wird. Das Poly(meth)acrylat ist bevorzugt durch eine freie oder kontrollierte radikalische Polymerisation einer oder mehrerer (Meth)acrylsäuren oder (Meth)acrylsäureester erhältlich und wird besonders bevorzugt thermisch vernetzt. Daher ist in einer besonders bevorzugten Ausführungsform die Schaumträger bildende Gerüststruktur ein thermisch vernetztes Poly(meth)acrylat.

In einer bevorzugten Variante werden für die Schaumträgerschicht thermisch-vernetzbare Polymere auf Poly(meth)acrylatbasis eingesetzt. Die Masse umfasst vorteilhaft ein Polymer, bestehend aus
(a1) 70 bis 100 Gew.-% Acrylsäureester und/oder Methacrylsäureester und/oder deren freien Säuren folgender Strukturformel 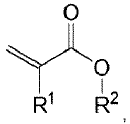 wobei R¹ H oder CH₃ darstellt und R² H oder Alkylketten mit 1 bis 14 C-Atomen darstellt;
(a2) 0 bis 30 Gew.-% olefinisch ungesättigte Monomere mit funktionellen Gruppen und
(a3) optional weitere Acrylate und/oder Methacrylate und/oder olefinisch ungesättigte Monomere, vorzugsweise mit einem Anteil zwischen 0 bis 5 Gew.-%, die mit der Komponente (a1) copolymerisierbar sind und eine funktionelle Gruppe aufweisen, die mittels des Vernetzungsreagenzes zu einer kovalenten Verknüpfung führt, wobei sich die Gewichtsangaben auf das Polymer beziehen.

Vorzugsweise werden für die Monomere (a1) Acrylmomonere, umfassend Acryl- und Methacrylsäureester mit Alkylgruppen, bestehend aus 1 bis 14 C-Atomen, eingesetzt.

Spezifische Beispiele, ohne sich durch diese Aufzählung einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate. Deren Anteil beträgt vorzugsweise maximal bis zu 20 Gew.-%, weiter vorzugsweise maximal bis zu 15 Gew.-%, jeweils bezogen auf die Gesamtmenge an Monomeren (a1).

Vorzugsweise werden für (a2) Monomere verwendet wie beispielsweise Maleinsäureanhydrid, Itacon-säureanhydrid, Glycidylmethacrylat, Benzylacrylat, Benzylmethacrylat, Phenylacrylat, Phenylmethacrylat, tert-Butylphenylacrylat, tert-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, wobei diese Aufzählung nicht abschließend ist.

Ebenso bevorzugt werden für die Komponente (a2) aromatische Vinylverbindungen eingesetzt, wobei die aromatischen Kerne bevorzugt aus C₄ bis C₁₈-Bausteinen bestehen und auch Heteroatome enthalten können. Besonders bevorzugte Beispiele sind Styrol, 4-Vinylpyridin, N-Vinylphthalimid, Methylstyrol und 3,4-Dimethoxystyrol, wobei diese Aufzählung nicht abschließend ist.

Besonders bevorzugte Beispiele für die Komponente (a3) sind Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexyl-methacrylat, N-tert-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, β-Acryloyloxypropionsäure, Trichloracrylsäure, Fumarsäure, Crotonsäure, Aconitsäure, Dimethylacrylsäure und 4-Vinylbenzoesäure, wobei diese Aufzählung nicht abschließend ist.

Monomere der Komponente (a3) können vorteilhaft auch derart gewählt werden, dass sie funktionelle Gruppen enthalten, die eine nachfolgende strahlenchemische Vernetzung, beispielsweise durch Elektronenstrahlen oder UV, unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid, Allylacrylat und wobei diese Aufzählung nicht abschließend ist.

Die Comonomere werden bevorzugt so gewählt, dass die Glasübergangstemperatur (Bestimmung nach Test VIII) der Polymere unterhalb der Anwendungstemperatur liegt.

Geeignete Verfahren zur Herstellung solcher Träger sind beispielsweise in der DE 10 2012 212 883 beschrieben.

In einer weiteren bevorzugten Variante werden für die Schaumträgerschicht strahlenchemisch härtbare Polymere auf Poly(meth)acrylatbasis eingesetzt, wobei zur Härtung insbesondere UV-Strahlung und/oder Elektronenstrahlen genutzt wird. Ausführungsmöglichkeiten für solche Schaumträgerschichten und Herstellverfahren sind zum Beispiel in EP 2 403 916 A1 in Abschnitten [0019] bis [0033], in EP 2 848 665 A1 in Abschnitten [0098] bis [0154], in EP 2 226 369 A1 in Abschnitten [0020] bis [0034] und in EP 2 403 916 A1 in Abschnitten [0014] bis [0022] zu finden.

Die Haftklebemasse wird zumindest auf einer Seite des Trägers aufgebracht, wobei ebenfalls Ausführungsformen bevorzugt sind, in denen der Träger beidseitig mit der Haftklebemasse beschichtet wird. Die Haftklebemasse kann nach dem Fachmann bekannten Verfahren auf den Träger aufgebracht werden, beispielsweise mittels Rakelverfahren, Düsenrakelverfahren, Rollstabdüsenverfahren, Extrusionsdüsenverfahren, Gießdüsen- und Gießverfahren. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Bevorzugt werden Hotmeltverfahren, bei denen die Haftklebemasse mittels Extrusion und/oder Düse aufgebracht wird. Es muss sich bei dem Verfahren zum Aufbringen jedoch nicht um eine Direktbeschichtung handeln. Die Haftklebemasse kann auch zunächst anderweitig beschichtet werden und in einem zweiten Schritt auf den Träger kaschiert werden. Gegebenenfalls können weitere Schichten oder Materiallagen anschließend inline oder offline zukaschiert oder beschichtet werden, so dass auch mehrschichtige /-lagige Produktaufbauten erzeugt werden können. Solche weiteren Schichten können spezielle zusätzliche Eigenschaften in das Klebeband einbringen wie z. B. die mechanischen Eigenschaften. Sie können auch die Verankerung zwischen Klebemasse und Träger fördern oder die Migration einzelner Bestandteile aus einer Schicht in die andere unterdrücken.

Vorzugsweise liegt die Schichtdicke der Haftklebemasse auf dem Träger zwischen 15 µm und 500 µm, bevorzugter zwischen 25 µm und 250 µm, insbesondere beträgt sie höchstens 150 µm oder sogar höchstens 100 µm. Beispielschichtdicken liegen bei 30 µm, 50 µm, 75 µm, 100 µm, 125 µm, 150 µm, 200 µm und 250 µm. Nicht ausgeschlossen sind jedoch auch deutlich höhere Schichtdicken von 500 bis 2000 µm, wie insbesondere 1000 bis 1500 µm. Beispielsweise kann die Dicke 750 oder 1000 µm betragen.

Die Gesamtdicke eines Klebebands kann im Bereich von 25 µm und 5 mm liegen, bevorzugt zwischen 50 µm und 2 mm, noch bevorzugter zwischen 100 µm und 1500 µm. Beispielklebebanddicken liegen bei 200 µm, 250 µm, 300 µm, 500 µm, 800 µm, 1000 µm und 1200 µm.

Die erfindungsgemäße Haftklebemasse hat sich insbesondere in Verbindung mit niedrigenergetischen Oberflächen wie PP/EPDM, PP/EPM und PP/EPR als vorteilhaft erwiesen. Daher ist ein weiterer Gegenstand der vorliegenden Erfindung die Verwendung der erfindungsgemäßen Haftklebemasse oder des erfindungsgemäßen Klebebands zur Verklebung eines Substrats enthaltend Ethylen(Co)-Polymer, Propylen (Co)-Polymer, EPR, EPM und/oder EPDM. Insbesondere wird die erfindungsgemäße Haftklebemasse oder das erfindungsgemäße Klebeband zur Verklebung eines Anbauteils enthaltend Ethylen (Co)-Polymer, Propylen (Co)-Polymer, EPR, EPM und/oder EPDM in oder an einem Automobil/Fahrzeug verwendet.

Ein weiterer Gegenstand der vorliegenden Erfindung ist die Verwendung der erfindungsgemäßen Haftklebemasse oder des erfindungsgemäßen Klebebands zur Verklebung von anderen Substraten wie insbesondere anderen Kunststoffen und Metallen.

Beansprucht wird schließlich ein Substrat (insbesondere Bauteil) enthaltend Ethylen (Co)-Polymer, Propylen (Co)-Polymer, EPR, EPM und/oder EPDM oder einen andersartigen Kunststoff, auf das ein Klebeband mittels einer erfindungsgemäßen Haftklebemasseschicht aufgebracht ist. Sehr bevorzugt enthält das Klebeband einen Schaumträger und hier insbesondere einen solchen mit Poly(meth)acrylat als Gerüststruktur.

Die vorliegende Erfindung wird anhand der folgenden Beispiele näher erläutert, wobei diese keinesfalls als Einschränkung des Erfindungsgedanken zu verstehen sind.

### Beispiele:

### I. Verwendete Chemikalien

**Tabelle 2: verwendete Chemikalien**

| **Komponente** | **Chemikalie** | **Beschreibung** | **Hersteller** |
|---|---|---|---|
| Elastomer | Septon 2005 | SEPS; | Kuraray |
| | | PS-Anteil 20 Gew.-%; | |
| | | Diblock-Anteil: 0 Gew.-% | |
| | | Peak-MW*: 265.000 g/mol | |
| | Septon 2004 | SEPS; | Kuraray |
| | | PS-Anteil 18 Gew.-%; | |
| | | Diblock-Anteil: 0 Gew.-% | |
| | | Peak-MW*: 100.000 g/mol | |
| | Septon 2002 | SEPS; | Kuraray |
| | | PS-Anteil 30 Gew.-%; | |
| | | Diblock-Anteil: 0 Gew.-% | |
| | | Peak-MW*: 56.000 g/mol | |
| | Septon 1020 | SEP-Diblock; | Kuraray |
| | | PS-Anteil 36 Gew.-%; | |
| | | Diblock-Anteil: 100 Gew.-% | |
| | Kraton G1650 | SEBS; | Kraton Corp. |
| | | PS-Anteil 30 Gew.-%; | |
| | | Diblock-Anteil: 0 Gew.-% | |
| | | Peak-MW*: 89.000 g/mol | |
| | Kraton G1654 | SEBS; | Kraton Corp. |
| | | PS-Anteil 31 Gew.-%; | |
| | | Diblock-Anteil: 0 Gew.-% | |
| | | Peak-MW*: 160.000 g/mol | |
| | Kraton G1651 | SEBS; | Kraton Corp. |
| | | PS-Anteil 33 Gew.-%; | |
| | | Diblock-Anteil: 0 Gew.-% | |
| | | Peak-MW*: 210.000 g/mol | |
| | Kraton G1633 | SEBS; | Kraton Corp. |
| | | PS-Anteil 30 Gew.-%; | |
| | | Diblock-Anteil: 0 Gew.-% | |
| | | Peak-MW*: 365.000 g/mol | |
| | Kraton G1657 | SEBS; | Kraton Corp. |
| | | PS-Anteil 13 Gew.-%; | |
| | | Diblock-Anteil: 29 Gew.-% | |
| | | Peak-MW*: 120.000 g/mol | |
| | Kraton G1642 | SEBS; | Kraton Corp. |
| | | PS-Anteil 21 Gew.-%; | |
| | | Diblock-Anteil: 0 Gew.-% | |
| | | Peak-MW*: 112.000 g/mol | |
| | | Ethylen-Gehalt: <50 Gew.-% | |
| | Kraton G1726 | SEBS; | Kraton Corp. |
| | | PS-Anteil 30 Gew.-%; | |
| | | Diblock-Anteil: 70 Gew.-% | |
| | | Peak-MW*: 65.000 g/mol | |
| | Kraton G1702 | SEP Diblock; | Kraton Corp. |
| | | PS-Anteil 28 Gew.-%; | |
| | | Diblock-Anteil: 100 Gew.-% | |
| | Hybrar 7125 | SEPS; | Kuraray |
| | | PS-Anteil 20 Gew.-%; | |
| | | Diblock-Anteil: 0 Gew.-% | |
| | | Peak-MW*: 110.000 g/mol | |
| | | Ethylen-Gehalt: <50 Gew.-% | |
| | YH-602 | SEBS (radial); | Sinopec |
| | | PS-Anteil 35 Gew.-%; | |
| | | Diblock-Anteil: 15 Gew.-% | |
| | | Peak-MW**: 230.000 g/mol | |
| Harz | Eastotac H100W | C₅ KW-Harz; | Eastman Chemical |
| | | Erw.-Punkt: 100 °C | |
| | | MMAP: 82 °C | |
| | | DACP: 82 °C | |
| | | Vollhydriert | |
| | Regalite R1125 | C₉ KW-Harz; | Eastman Chemical |
| | | Erw.-Punkt: 125 °C | |
| | | MMAP: 88 °C | |
| | | DACP: 56 °C | |
| | | Vollhydriert | |
| | Sukorez SU120 | DCPD- KW-Harz; | Kolon |
| | | Erw.-Punkt: 120 °C | |
| | | MMAP: 58 °C | |
| | | DACP: 76 °C | |
| | | Vollhydriert | |
| | Eastotac H115W | C₅ KW-Harz; | Eastman Chemical |
| | | Erw.-Punkt: 115 °C | |
| | | MMAP: 82 °C | |
| | | DACP: 82 °C | |
| | | Vollhydriert | |
| | Regalite R7100 | C₉ KW-Harz; | Eastman Chemical |
| | | Erw.-Punkt: 100 °C | |
| | | MMAP: 66 °C | |
| | | DACP: 14 °C | |
| | | 70 Gew.-% hydriert | |
| | Sukorez SU90 | DCPD KW-Harz; | Kolon |
| | | Erw.-Punkt: 90 °C | |
| | | MMAP: nicht ermittelt | |
| | | DACP: nicht ermittelt | |
| | | Vollhydriert | |
| | Regalite R1090 | C₉ KW-Harz; | Eastman Chemical |
| | | Erw.-Punkt: 90 °C | |
| | | MMAP: 77 °C | |
| | | DACP: 39 °C | |
| | | Vollhydriert | |
| Weichmacher | Kraton G1750 | "Typ1" | Kraton Corp. |
| | | Ethylen-Propylen-Copolymer | |
| | | Peak-MW: 390.000 g/mol | |
| | | MW: 365.000 g/mol | |
| | Keltan 500R | "Typ1" | Arlanxeo |
| | | Ethylen-Propylen-Copolymer | |
| | | Peak-MW: 110.000 g/mol | |
| | | MW: 114.000 g/mol | |
| | Indopol H100 | "Typ2" | Ineos |
| | | Polybuten | |
| | | Peak-MW: 1.800 g/mol | |
| | | MW: 2.800 g/mol | |
| | TerPIB 2600 | "Typ2" | ter Hell |
| | | Polybuten | |
| | | Peak-MW: 11.000 g/mol | |
| | | MW: 9.200 g/mol | |
| | Pionier 2070P | "Typ3" | Hansen & Rosenthal |
| | | naphthenisches Mineralöl | |
| | | Peak-MW: 950g/mol | |
| | | MW: 920 g/mol | |
| | Trilene CP80 | "Typ1" | Lion Elastomer |
| | | Ethylen-Propylen-Copolymer | |
| | | Peak-MW: 28.000 g/mol | |
| | | MW: 35.000 g/mol | |
| | Vistalon 404 | "Typ1" | ExxonMobile |
| | | EPR | |
| | | Peak-MW: 2.400.000 g/mol | |
| | | MW: 1.660.000 g/mol | |
| | LI R290 | "Typ1" | Kuraray |
| | | Ethylen-Propylen-Copolymer | |
| | | Peak-MW. 42.000 g/mol | |
| | | MW: 36.700 g/mol | |
| | Indopol H6000 | "Typ2" | Ineos |
| | | Polybuten | |
| | | Peak-MW. 16.000 g/mol | |
| | | MW: 15.900 g/mol | |
| | Oppanol B10 | "Typ2" | BASF |
| | | Polyisobutylen | |
| | | Peak-MW. 33.000 g/mol | |
| | | MW: 43.700 g/mol | |

- SEPS:: Styrol-Ethylen/Propylen-Styrol-Blockcopolymer
- SEP:: Styrol-Ethylen/Propylen-Blockcopolymer
- SEBS:: Styrol-Ethylen/Butylen-Styrol-Blockcopolymer
- DCPD:: Dicyclopentadien-Polymer
- EPR:: Ethylen-Propylen-Kautschuk
- PS-Anteil:: Polystyrolanteil
- Peak-MW:: Peak-Molekulargewicht
- Peak-MW*:: Peak-Molekulargewicht des Triblockcopolymers
- Peak-MW**:: Peak-Molekulargewicht des radialen Blockcopolymers
- KW-Harz:: Kohlenwasserstoffharz
- Erw.-Punkt:: Erweichungspunkt
- MW:: gewichtsmittleres Molekulargewicht

### II. Versuche

Es wurden eine Reihe von erfindungsgemäßen Haftklebemassen sowie entsprechende Vergleichsklebemassen hergestellt und daraus Testklebebandmuster erzeugt. Dann wurden die in den Tabellen wiedergegebenen Eigenschaften wie Klebkraft (Peel), Scherstandszeit (SSZ) und Wärmescherfestigkeit (SAFT) getestet. Dabei wurden jeweils unterschiedliche Aspekte betrachtet.

Die Herstellung der Prüfmuster erfolgte folgendermaßen. Die Bestandteile der Haftklebemassen wurden 30%ig in Siedegrenzenbenzin/Toluol/Aceton gelöst und mit einem Streichbalken entweder auf eine PET-Folie ausgerüstet mit einem trennenden Silikon oder auf eine geätzte PET-Folie (36 µm Dicke) in der gewünschten Schichtdicke ausgestrichen, anschließend bei 100 °C für 15 min das Lösungsmittel abgedampft und so die Masseschicht getrocknet.

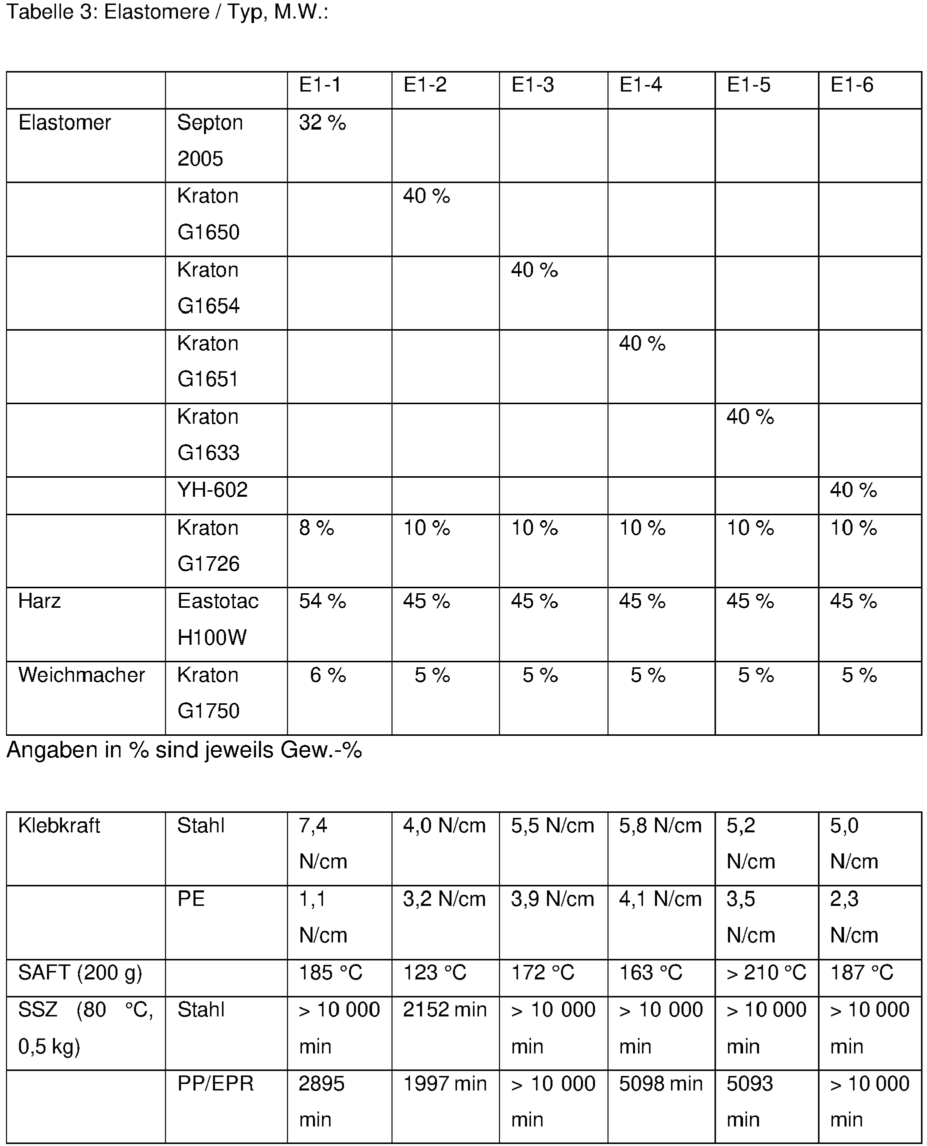

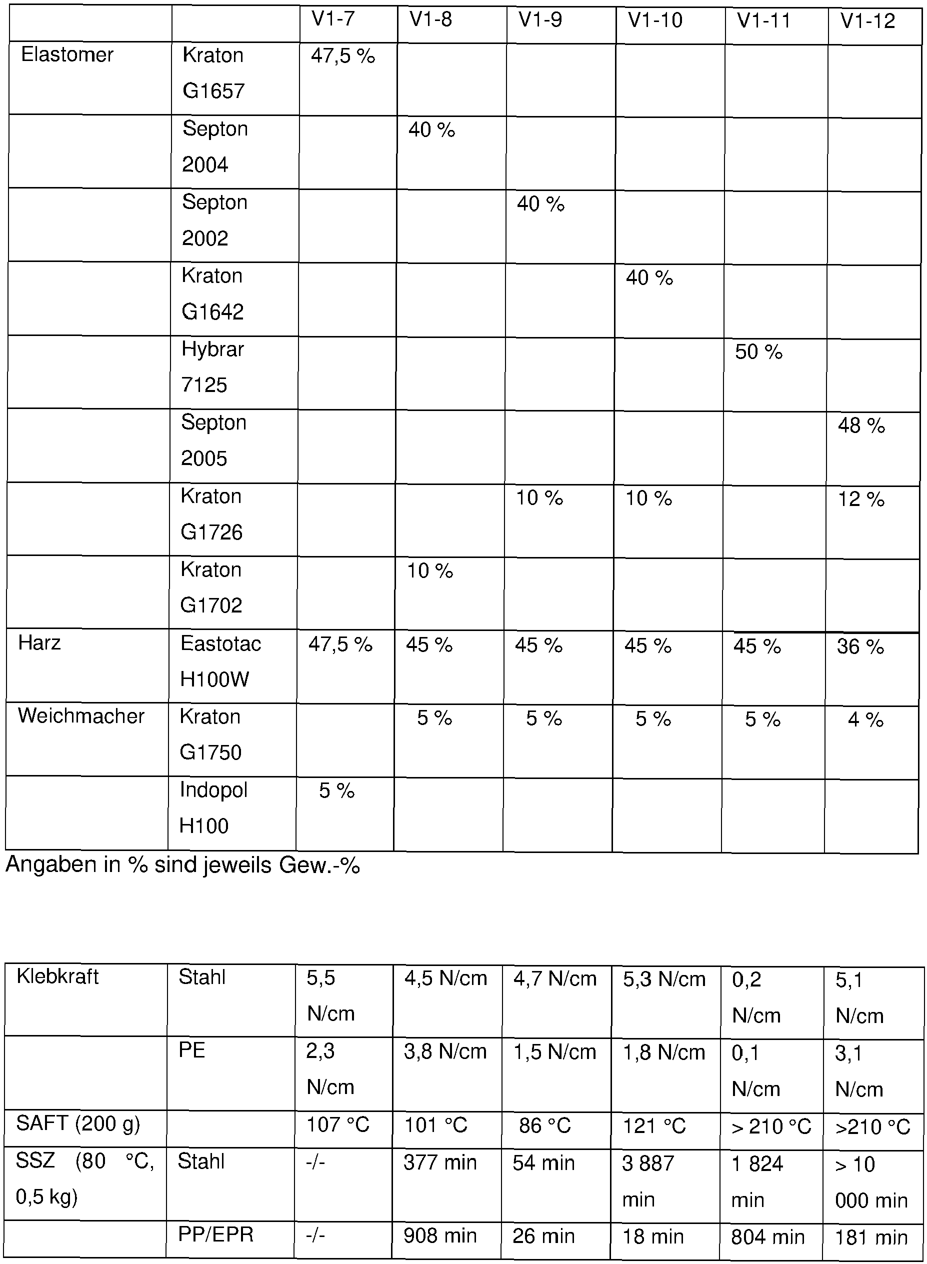

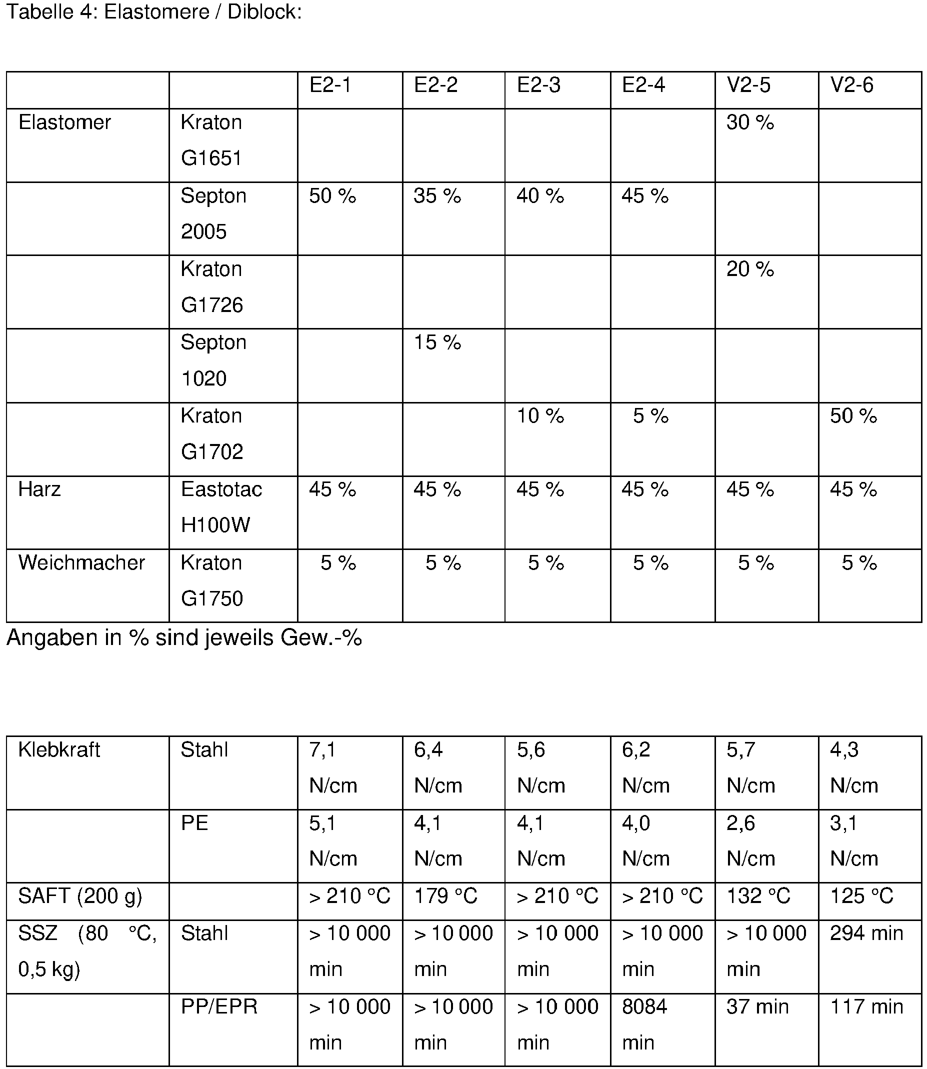

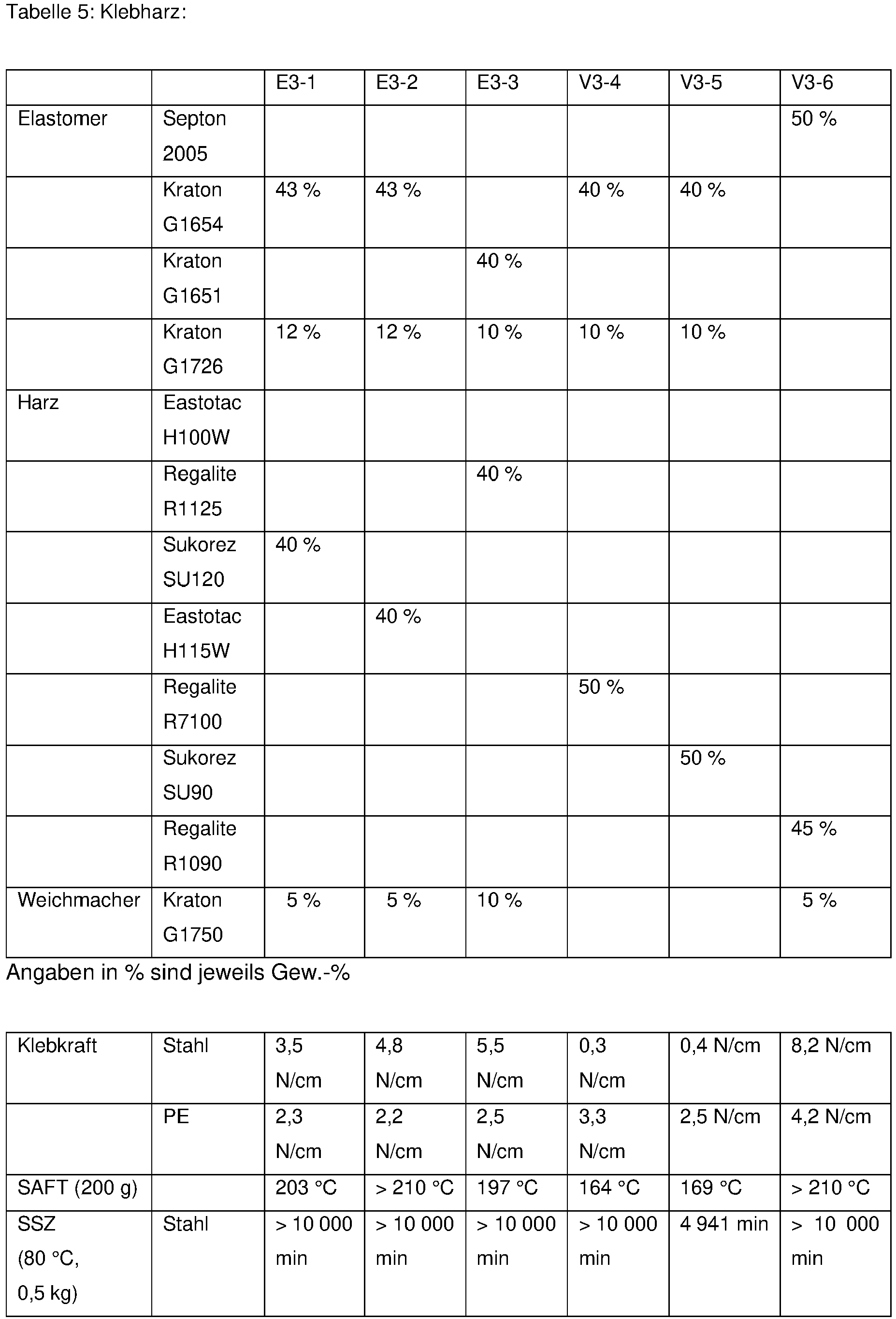

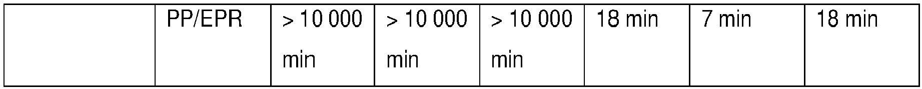

**Tabelle 6: Weichmacher:**

| | | E4-1 | E4-2 | E4-3 | E4-4 | V4-4 | V4-5 | V4-6 |
|---|---|---|---|---|---|---|---|---|
| Elastomer | Septon 2005 | | 45% | 50% | | 50% | 50% | 50% |
| | Kraton G 1654 | 40% | | | 40% | | | |
| | Kraton G1726 | 10% | | | 10% | | | |
| | Kraton G1702 | | 5% | | | | | |
| Harz | Eastotac H100W | | 40% | 45% | | 45% | 45% | 45% |
| | Regalite R1125 | 45% | | | 40% | | | |
| Weichmacher | Kraton G1750 | | 10% | | | | | |
| | TerPIB 2600 | 5% | | | | | | |
| | Keltan 500R | | | | 10% | | | |
| | Pionier 2070P | | | 5% | | | | |
| | Trilene CP80 | | | | | 5% | | |
| | Vistalon 404 | | | | | | 5% | |
| | LI R290 | | | | | | | 5% |
| Angaben in % sind jeweils Gew.-% | | | | | | | | |
| Klebkraft | Stahl | 5,1 N/cm | 5,0 N/cm | 8,0 N/cm | 5,3 N/cm | 7,9 N/cm | 7,1 N/cm | 8,8 |
| | PE | 0,8 N/cm | 3,5 N/cm | 5,3 N/cm | 0,3 N/cm | 5,0 N/cm | 4,5 N/cm | 5,3 |
| SAFT (200 g) | | 186 °C | > 210 °C | > 210 °C | 184 °C | > 210 °C | > 210 °C | > 210 °C |
| SSZ (80 °C, 0,5 kg) | Stahl | > 10 000 min | > 10 000 min | 1 842 min | > 10 000 min | > 10 000 min | > 10 000 min | > 10 000 min |
| | PP/EPR | > 10 000 min | 4 528 min | 804 min | > 10 000 min | 11 min | 22 min | 9 min |

Wie aus den zur Verfügung gestellten Daten ersichtlich, werden die vorteilhaften Eigenschaften der erfindungsgemäßen Haftklebemasse vor allem durch die Kombination ausgewählter Bestandteile und deren Verhältnisse bestimmt. So können Haftklebemassen erreicht werden, die auch bei hohen Temperaturen eine hervorragende Klebkraft auf unterschiedlichen Substraten zeigen.

Anhand eines weiteren Beispiels soll veranschaulicht werden, dass sich erfindungsgemäße Klebemassen ausgezeichnet als funktionelle Haftklebeschicht auf einem Trägermaterial, hier einem viskoelastischen Träger aus geschäumtem Polyacrylat, zur Verklebung eines PP/EPR-Substrats eignen. Als Formulierung für die funktionelle Haftklebeschicht diente die in E2-1 aufgeführte Zusammensetzung. Ein erstes 50 µm Transfertape dieser Haftklebemasseschicht wurde auf die erste Seite eines 800 µm dicken Trägers laminiert und ein zweites 50 µm Transfertape derselben Haftklebemasseschicht auf die gegenüberliegende Seite des Trägers. Als Schaumträger diente eine Schicht nach VT5 aus DE 10 2012 212 883 A1. Es wurde die Klebkraft im 90°-Winkel bei 23 °C und 50 % rel. Luftfeuchtigkeit bei 300 mm/min Abzugsgeschwindigkeit auf PP/EPR (Materialspezifikation siehe Test Vlla; das Klebeband wurde dazu nach Test V auf die Testplatte gebracht und für 72 h bei 23 °C und 50 % rel. Luftfeuchtigkeit äquilibriert) bestimmt und Schaumspalten bei einer Kraft von 52,8 N/cm gefunden. Es wurde zudem ein Test auf Wärmescherfestigkeit durchgeführt. Hier wurde eine statische Scherfestigkeit (Test Vlla) von > 10 000 min gemessen.

### Prüfmethoden

Alle Messungen zur Bestimmung von Klebeigenschaften wurden, sofern nichts anderes angegeben ist, bei 23 °C und 50 % rel. Luftfeuchtigkeit durchgeführt.

### Test I - Molmasse (GPC)

### (a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt (µ = µm; 1 Å = 10⁻¹⁰ m).

### (b) gewichtsmittlere Molmasse insbesondere von Weichmachern

Das gewichtsmittlere Molekulargewicht MW wird mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - (Kleb)Harzerweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test III - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test IV - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test V - Klebkraft

Die Bestimmung der Klebkraft (gemäß AFERA 5001) wird wie folgt durchgeführt. Als definierter Haftgrund wird eine polierte Stahlplatte (Test Va) beziehungsweise eine PE-Platte (Test Vb) mit einer Stärke von 2 mm eingesetzt. Das zu untersuchende verklebbare Flächenelement (50 µm Haftklebeschicht auf 36 µm geätzter PET-Folie) wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

### Test VI - Wärmescherfestigkeit (SAFT)

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (200 g) belastet und die Scherstrecke aufgezeichnet.

### Messprobenpräparation:

Das zu untersuchende Klebeband (50 µm Haftklebemasseschicht auf silikonisiertem PET-Liner) wird mit einer der Klebemassenseiten auf eine 50 µm dicke Aluminiumfolie geklebt. Das so präparierte Klebeband wird auf eine Größe von 10 mm * 50 mm geschnitten.

Die zugeschnittene Klebebandprobe wird mit der anderen Klebemassenseite auf eine polierte, mit Aceton gereinigte Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Klebebandes senkrecht nach unten zeigt.

### Messung:

Die zu messende Probe wird am unteren Ende mit einem Gewicht von 50 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test VII - Statische Scherfestigkeit

Die Scherfestigkeit bei 80 °C ist ein Maß für die innere Festigkeit der Klebmasse bei erhöhter Temperatur und wird im so genannten statischen Schertest folgendermaßen geprüft: Die Prüfung erfolgt in Anlehnung an PSTC-7 bei 80 °C unter Verwendung eines Gewichtes von 0,5 kg. Ein 1,3 cm breiter Streifen dieses Musters (50 µm Haftklebeschicht auf 36 µm geätzter PET-Folie) wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (80 °C), aber ohne Last äquilibriert. Dann wird das Testgewicht (0,5 kg) angehängt, so dass eine Scherbeanspruchung parallel zur Verklebungsfläche entsteht, und die Zeit gemessen, bis die Verklebung versagt. Das Messergebnis wird in Minuten angegeben und bei Versagen die Versagensart (Kohäsionsbruch oder Adhäsionsbruch). Es wird der Median aus drei Einzelmessungen angegeben. Der Prüfuntergrund ist eine PP/EPR-Platte (Test Vlla) beziehungsweise eine polierte Stahlplatte (Test Vllb). Als Grundmaterial für die PP/EPR-Platten diente Hifax TRC 135X/4 Black der Fa. LyondellBasell.

### Test VIII - Glasübergangstemperatur

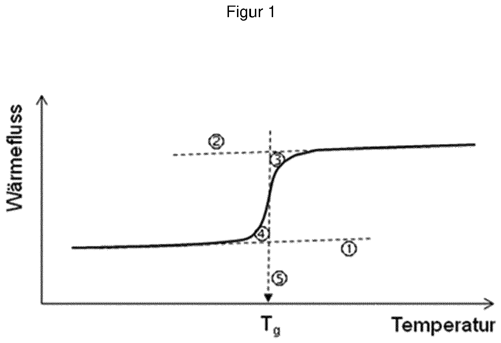

Die Glasübergangstemperatur wird mittels dynamischer Scanning Kalorimetrie (DSC) bestimmt. Dazu werden ca. 5 mg der unbehandelten Proben in ein Aluminiumtiegelchen (Volumen 25 µL) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergange werden als Stufen im Thermogramm erkannt. Die Glasübergangstemperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Test IX - Polyvinylaromaten-Anteil

Der Anteil Polyvinylaromaten-Blöcken in hydrierten Polyvinylaromat-Polydien-Blockcopolymeren wird, sofern nicht anderweitig bekannt, mittels ¹³C-NMR bestimmt. Am Beispiel der Bestimmung des Polystyrol-Anteils in hydrierten Polystyrol-Polydien-Blockcopolymeren (SEBS) wird die ¹³C-NMR im Folgenden erläutert. Aus dem ¹³C-Spektrum wird der Mittelwert aus zwei Integralen gebildet, nämlich dem Styrol-C-Signal bei ca. 144 bis 146 ppm und dem Styrol-CH bei ca. 125 bis 127 ppm entsprechend. Dieser Mittelwert wird für SEBS in Relation zum Butylen-Integral (hydriertes 1,2-BD), nämlich dem CH3-Signal bei ca. 10 ppm, und zum Ethylen-Integral (1,4-BD), den man aus dem gesamtolefinischen Integral bei ca. 20 bis 50 ppm ausrechnen kann, gesetzt. Die so erhaltenen Anteile in mol-% werden dann in Gew.-% umgerechnet.

## Patentansprüche

1. Haftklebemasse umfassend:
a) mindestens 38 Gew.-% und höchstens 58 Gew.-% einer Elastomerkomponente, wobei,
i) die Elastomerkomponente zumindest 60 Gew.-%, bezogen auf die Elastomerkomponente, hydriertes Polyvinylaromat-Polydien-Blockcopolymer mit einem Polyvinylaromatenanteil von mindestens 18 Gew.-% und einem Peak-Molekulargewicht von 80.000 bis 500.000 g/mol, bestimmt gemäß GPC (Test I), enthält;
ii) die Polydien-Blöcke im Wesentlichen voll hydriert sind; und
iii) das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat und B = Ethylen und Butylen oder Ethylen und Propylen, Z = Derivat einer Kopplungssubstanz ist, und wobei der Ethylen-Anteil in den B-Blöcken mindestens 50 Gew.-% beträgt.
b) eine Klebharzkomponente;
c) eine Weichmacherkomponente und
d) optional weitere Zuschlagsstoffe,
wobei sich der Anteil der Elastomerkomponente auf das Gesamtgewicht der Haftklebemasse bezieht.

2. Haftklebemasse gemäß Anspruch 1, **dadurch gekennzeichnet, dass** die Polyvinylaromat-Polydien-Blockcopolymere einen Polyvinylaromatanteil von 20 bis 36%, vorzugsweise 25 bis 33% aufweisen.

3. Haftklebemasse gemäß wenigstens einem der vorangehenden Ansprüche, **dadurch gekennzeichnet, dass** der Anteil an Elastomerkomponente 40 bis 55 Gew.-%, beträgt, jeweils bezogen auf das Gesamtgewicht der Haftklebemasse.

4. Haftklebemasse gemäß wenigstens einem der vorangehenden Ansprüche, **dadurch gekennzeichnet, dass** die Elastomerkomponente zusätzlich ein Polyvinylaromat-Polydien Diblockcopolymer A'-B' enthält, wobei A' = A und B' = B sein kann und die Polydienblöcke im Wesentlichen voll hydriert sind.

5. Haftklebemasse nach Anspruch 4, **dadurch gekennzeichnet, dass** die Elastomerkomponente zumindest ein hydriertes Diblockcopolymer mit einem Peak-Molekulargewicht, bestimmt mittels GPC, von < 100.000 g/mol aufweist und sein Anteil bezogen auf die Elastomerkomponente höchstens 25 Gew.-%, bevorzugt 15 Gew.-% bis 20 Gew.-% beträgt.

6. Haftklebemasse gemäß Anspruch 4, **dadurch gekennzeichnet, dass** die Elastomerkomponente zumindest ein hydriertes Diblockcopolymer mit einem Peak-Molekulargewicht, bestimmt mittels GPC, von > 100.000 g/mol aufweist und sein Anteil bezogen auf die Elastomerkomponente höchstens 40 Gew.-%, bevorzugt 15 Gew.-% bis 35 Gew.-% beträgt.

7. Haftklebemasse gemäß wenigstens einem der vorangehenden Ansprüche, **dadurch gekennzeichnet, dass** der Anteil an Klebharzkomponente 35 bis 60 Gew.-% bezogen auf das Gesamtgewicht der Haftklebemasse beträgt.

8. Haftklebemasse gemäß wenigstens einem der vorangehenden Ansprüche, **dadurch gekennzeichnet, dass** es sich bei der Klebeharzkomponente um partiell oder vollständig hydriertes Harz auf Basis des Dicyclopentadiens, partiell, oder vollständig hydrierte Kohlenwasserstoffharze auf Basis von C₅, C₅/C₉- oder C₉-Monomerströmen, Polyterpenharze auf Basis von α-Pinen und/oder β-Pinen und δ-Limonen oder ein hydriertes Polymerisat reiner C₈-oder C₉-Aromaten handelt, wobei das Harz partiell oder vollständig hydriert ist.

9. Haftklebemasse gemäß wenigstens einem der vorangehenden Ansprüche, **dadurch gekennzeichnet, dass** der Anteil an Weichmacher in der Haftklebemasse nicht mehr als 20 Gew.-%, vorzugsweise 2 bis 15 Gew.-%, besonders bevorzugt 4 bis 12 Gew.-% beträgt, jeweils bezogen auf das Gesamtgewicht der Haftklebemasse.

10. Haftklebemasse gemäß wenigstens einem der vorangehenden Ansprüche, **dadurch gekennzeichnet, dass** der Weichmacher ausgewählt ist aus der Gruppe bestehend aus Ethylen/Propylen-Copolymer, Ethylen/Butylen-Copolymer und Butylen/iso-Butylen-(Co)-Polymer.

11. Haftklebemasse nach Anspruch 10, **dadurch gekennzeichnet, dass** der Weichmacher eine gewichtsmittlere Molmasse von mindestens 100.000 g/mol und höchstens 1.000.000 g/mol aufweist und ein Ethylen/Propylen-Copolymer oder Ethylen/Butylen-Copolymer ist mit linearer oder radialer Struktur.

12. Haftklebemasse nach Anspruch 10, **dadurch gekennzeichnet, dass** der Weichmacher eine gewichtsmittlere Molmasse von mindestens 3.000 g/mol und höchstens 20.000 g/mol aufweist und ein Butylen/iso-Butylen-(Co)-Polymer ist.

13. Klebeband mit einem Träger, auf den mindestens eine Schicht einer Haftklebemasse gemäß wenigstens einem der Ansprüche 1 bis 12 aufgebracht ist, wobei der Träger vorzugsweise ein Schaumträger ist.

14. Klebeband mit einem Schaumträger, auf den mindestens eine Schicht einer Haftklebemasse gemäß wenigstens einem der Ansprüche 1 bis 12 aufgebracht ist, wobei der Schaumträger vorzugsweise eine viskoelastische geschäumte Poly(meth)acrylatschicht ist.

15. Verwendung einer Haftklebemasse gemäß wenigstens einem der Ansprüche 1 bis 12 zur Verklebung eines Substrats enthaltend Ethylen(Co)-Polymer, Propylen (Co)-Polymer, EPR, EPM und/oder EPDM.

16. Substrat, insbesondere ein Bauteil, enthaltend Ethylen (Co)-Polymer, Propylen (Co)-Polymer, EPR, EPM und/oder EPDM, auf das ein Klebeband mittels einer Haftklebemasse gemäß wenigstens einem der Ansprüche 1 bis 12 aufgebracht ist, wobei das Klebeband vorzugsweise einen geschäumten Träger enthält.
